(19) **Europäisches Patentamt**
**European Patent Office**
**Office européen des brevets**

(11) **EP 3 682 521 B1**

(12) **FASCICULE DE BREVET EUROPEEN**

(45) Date de publication et mention
de la délivrance du brevet:
**12.05.2021 Bulletin 2021/19**

(21) Numéro de dépôt: **18779450.8**

(22) Date de dépôt: **11.09.2018**

(51) Int Cl.:
*H02J 3/24* *(2006.01)*     *H02J 9/06* *(2006.01)*
*H02J 3/30* *(2006.01)*     *H02J 3/38* *(2006.01)*

(86) Numéro de dépôt international:
**PCT/IB2018/056920**

(87) Numéro de publication internationale:
**WO 2019/049102 (14.03.2019 Gazette 2019/11)**

(54) **SYSTÈME DE PROTECTION POUR LIMITER L'IMPACT DES PERTURBATIONS D'UN RÉSEAU ÉLECTRIQUE EXTERNE SUR LE RÉSEAU LOCAL D'UN SITE BRANCHÉ SUR LE RÉSEAU EXTERNE**

SCHUTZSSYSTEM ZUR BEGRENZUNG DER AUSWIRKUNGEN VON STÖRUNGEN EINES EXTERNEN STROMNETZES AUF EIN MIT DEM EXTERNEN STROMNETZ VERBUNDENES LOKALES STROMNETZ

PROTECTING SYSTEM FOR LIMITING THE IMPACT OF PERTURBATIONS OF AN EXTERNAL ELECTRICAL POWER NETWORK ON AN ELECTRICAL LOCAL POWER NETWORK CONNECTED TO SAID EXTERNAL ELECTRICAL POWER NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2017 BE 201705644**

(43) Date de publication de la demande:
**22.07.2020 Bulletin 2020/30**

(73) Titulaire: **KS RESEARCH, société anonyme
4651 Battice (BE)**

(72) Inventeur: **SCHOEBRECHTS, Jacques
4651 Battice (BE)**

(74) Mandataire: **Donné, Eddy et al
Bureau M.F.J. Bockstael nv.
Arenbergstraat 13
2000 Antwerpen (BE)**

(56) Documents cités:
**EP-A1- 1 533 884     EP-A2- 1 126 576
EP-A2- 1 589 630     DE-C1- 19 857 754
GB-A- 1 309 858**

Printed by Jouve, 75001 PARIS (FR)

**Description**

L'invention concerne un système de protection pour limiter l'impact des perturbations d'un réseau électrique urbain ou industriel externe sur le réseau local d'un site branché sur le réseau externe.

L'invention concerne plus spécialement un système de protection pour limiter l'impact de telles perturbations sur les machines utilisées dans un réseau local qui est pourvu d'au moins une source d'énergie (appelée source locale) d'origine différente intégrée dans le réseau précité, telle que les éoliennes, les panneaux photovoltaïques, les batteries de stockage, ou d'autres sources d'énergie verte, voire même les groupes électrogènes pouvant injecter l'excédent d'énergie dans le réseau urbain ou industriel.

L'invention est destinée plus spécialement à limiter l'impact des perturbations fortes du réseau externe pouvant avoir des conséquences graves sur les utilisateurs du réseau local par l'arrêt des machines électriques diverses, telles que les ordinateurs, les machines de production, les installations de sécurité et cetera, utilisés au moment de la perturbation ainsi que sur la continuité de service des sources locale.

Il existe déjà sur le marché des systèmes de protection ASI (alimentation sans interruption) tels que décrits dans le brevet EP 1.533.884 ou des conditionneurs de réseau qui consistent en l'association d'une machine synchrone avec une self dans le réseau local et éventuellement une réserve d'énergie cinétique associée directement ou indirectement à la machine synchrone.

D'autres systèmes d'alimentation sans coupure ou de conditionneur du réseau sont connus des brevets GB 1.309.858, DE 198 57 754 et US 6.023.152, mais sans intégration de sources d'énergie locales d'origine verte dans le réseau local.

La demande de brevet EP 1.589.630 divulgue un système de régulation d'une éolienne branchée sur un réseau externe, mais ne donne pas de solution pour protéger un réseau local branché sur le réseau externe.

Pendant le fonctionnement, normal du réseau urbain ou industriel externe, la machine synchrone est alimentée par le réseau externe, de ce fait elle fonctionne constamment à une certaine vitesse de rotation et constitue une réserve d'énergie cinétique d'autant plus élevée si elle est associée à un volant d'inertie ou à une réserve d'énergie telle qu'un accumulateur d'énergie bien connu de l'état de l'art.

Lors d'une perturbation dans le réseau urbain ou industriel externe, la machine synchrone cesse d'être alimentée mais par son énergie accumulée continue à alimenter instantanément le réseau local.

Dans certains cas la machine synchrone peut être également associée à un moteur thermique via un embrayage qui est démarré dès que les sources d'énergie locales ne sont pas suffisantes pour alimenter à elles seules les utilisateurs locaux en cas de disparition du réseau urbain ou industriel externe.

Ces systèmes de protection, selon leur degré de sophistication, offrent d'énormes avantages en termes de protection des utilisateurs contre les différentes perturbations du réseau urbain ou industriel externe (telles que les microcoupures, coupures, variation de tensions, harmoniques), tout en maintenant une capacité de court-circuit compatible avec la sélectivité du site telle qu'elle avait été établie avant l'introduction du système de protection.

Des technologies « vertes » telles que les panneaux photovoltaïques, les éoliennes, et les systèmes de stockage parfois associés tels que les batteries, sont généralement connectées au réseau local par des onduleurs à semi-conducteurs pour transformer la tension de l'électricité produite dans une tension compatible avec le réseau.

Dans certains cas, pour autant que l'énergie « verte » puisse délivrer une puissance suffisante, les utilisateurs du réseau local souhaiteraient se protéger des interruptions ou des fortes perturbations du réseau externe et de profiter de l'énergie verte produite par ailleurs.

Lors, par exemple, de la détection d'une coupure du réseau urbain ou industriel externe, le réseau local est automatiquement coupé du réseau externe en ouvrant des contacteurs ou des disjoncteurs. Le temps pour ouvrir les disjoncteurs est typiquement inférieur à 100 millisecondes.

Le temps d'ouvrir les disjoncteurs pour isoler le réseau local du site, les dispositifs « verts » doivent fournir la puissance aux utilisateurs du site mais également à tous les utilisateurs qui se trouvent entre l'endroit de la coupure réelle et l'entrée du réseau du site.

Généralement cette puissance est considérable et est perçue comme un court-circuit du côté des utilisateurs du site engendrant des surintensités qui sont suffisantes pour provoquer l'arrêt des utilisateurs et des onduleurs des sources locales connectés sur ce réseau local.

Ceci provient du fait que les onduleurs des batteries, des panneaux photovoltaïques, voire dans certains cas des éoliennes, n'ont pas les capacités de fournir des pointes de courant suffisantes pour maintenir une tension acceptable pour le réseau local du site, tout en alimentant le réseau urbain ou industriel externe pendant le temps d'ouverture des disjoncteurs qui connectent le réseau local au réseau externe défectueux.

En même temps, la tension à l'entrée du réseau local tombe à une valeur proche de 0 volts par l'effet du court-circuit, ce qui provoque l'arrêt des systèmes électriques branchés sur le réseau local.

Un autre dispositif d'alimentation électrique sans interruption (UPS « Uninterruptible Power Supply ») est divulgué dans le document EP 1.126.576, le dispositif comprenant un générateur standard, dont la réactance subtransitoire est typiquement de l'ordre de 12 à 20%, associé avec un onduleur à l'IGBT (« Isolated Gate Bipolar Transistor ») ultrarapide, c'est-à-dire avec un temps de réponse de l'ordre de la milliseconde, dans le cadre d'une configuration bien connue et une self à prise intermédiaire.

En revanche, dans les UPS dynamiques, on utilise généralement des machines synchrones à basse réactance subtransitoire dont la valeur est de 4 à 7% pour obtenir, en combinaison avec une self à prise intermédiaire, une bonne amélioration de la forme de la tension sur la charge lorsque le courant présente un taux d'harmonique élevé et également pour pouvoir faire face aux courts-circuits qui surviennent sur le réseau comme du côté de la charge. Les courts-circuits sur le réseau amont entrainent une chute de tension à la sortie d'autant plus élevée que le temps d'ouverture du dispositif de coupure entre le réseau et l'UPS est long.

Dans le document EP 1.126.576, l'onduleur à IGBT, grâce à sa rapidité de réponse (intra-période), permet de corriger instantanément la forme d'onde de la tension de sortie de l'UPS et en principe ne requiert pas de machine synchrone à basse réactance pour réaliser cette amélioration, d'où un coût moins élevé pour la réalisation de l'UPS, du fait du moindre coût du générateur standard par rapport au prix d'une machine synchrone à basse réactance et de même puissance.

En outre ce dispositif, grâce à l'onduleur, permet de fournir une partie de la puissance réactive qui est absorbée par le réseau lorsque sa tension est inférieure à la tension de la charge sans surcharger la machine synchrone.

Le fait d'utiliser dans le brevet EP 1.126.576 un générateur à réactance élevée entraine l'usage d'une self à prise intermédiaire dont la branche située du côté du réseau à une valeur relativement élevée, par exemple de 50 à 70%, ce qui pourrait conduire à une instabilité du système, surtout en cas de court-circuit sur les charges en aval, compte tenu des limitations en courant typique des onduleurs à semi-conducteurs.

Si l'utilisation d'interrupteurs à ouverture rapide (temps d'ouverture de l'ordre de 10 millisecondes), basés sur des semi-conducteurs tels que les interrupteurs statiques, peut mettre les charges à l'abri d'un court-circuit brutal sur le réseau, l'utilisation d'une machine synchrone standard, à cause de sa réactance subtransitoire élevée par rapport à la réactance subtransitoire faible des machines utilisée dans la plupart des UPS dynamiques, n'empêchera pas l'impact dommageable d'un court-circuit en aval car l'onduleur associé, au vu de sa limitation intrinsèque en courant, ne pourra pas y subvenir dans ce cas.

En ce qui concerne les différentes sources locales mentionnées dans l'EP 1.126.576, celles-ci sont toutes des sources à courant continu qui se trouvent en amont de l'onduleur sans aucune possibilité d'éviter des perturbations mutuelles en cas de défectuosité de l'une d'elles puisqu'elles sont directement interconnectées entre elles.

L'invention a pour but d'éviter un ou plusieurs des inconvénients susdits en présentant un système de protection permettant d'associer de façon fiable et adéquate des sources locales d'énergie d'origine diverses avec un réseau urbain ou industriel externe tout en garantissant la continuité et la qualité de l'alimentation pour les utilisateurs, que ce soit en présence d'un court-circuit ou d'un appel de courant du côté du réseau ou d'une défectuosité sur une des sources locales.

Ce but est atteint selon l'invention par un système de protection selon la revendication indépendante 1.

Les selfs jouent le rôle de tampon dont le but est de limiter le courant injecté vers le réseau urbain ou industriel externe en cas de coupure du réseau externe et en même temps de limiter le courant fourni par la ou les sources locales d'énergie. Ceci a pour effet que la chute de tension dans le réseau local lors d'une panne électrique du réseau externe est limitée, de façon telle que les systèmes électriques du réseau local ne tombent pas en panne.

De cette manière, la puissance électrique développée par la machine synchrone et par la ou les source (s) d'énergie locale(s) est principalement utilisée pour alimenter les utilisateurs du réseau local dans les premiers instants de la panne du réseau externe, le temps nécessaire pour isoler le réseau local du réseau externe par l'ouverture du disjoncteurs réseau.

Parmi les sources d'énergie électrique d'origine différente branchées sur le réseau local se trouvent les panneaux photovoltaïques, les éoliennes, les batteries ou d'autres accumulateurs d'énergie électrique, des groupes électrogènes, et d'autres sources qui peuvent opérer en cogénération d'énergie dans le réseau local.

La machine synchrone utilisée est une machine à basse réactance subtransitoire inférieure à 10% de la réactance nominale du réseau local ou de préférence de l'ordre de 5 à 8% de cette réactance nominale du réseau local eu égard à la puissance nominale et à la tension nominale de ce réseau local.

Ainsi., la machine synchrone a une très forte capacité de court-circuit pendant les premiers centièmes de secondes qui correspondent à la constante de temps de la réactance subtransitoire après l'occurrence du défaut sur le réseau externe est donc capable de fournir un courant élevé de, par exemple, 10 fois son courant nominal en régime subtransitoire.

En effet, une machine synchrone est caractérisée entre autres par sa réactance subtransitoire, qui est la réactance pendant les premiers centièmes de seconde, cette réactance est faible dans cette période et augmente rapidement ensuite. La réactance est définie par rapport à la puissance nominale que peut livrer la machine synchrone sous la tension nominale et est exprimée en Ohm ou en % dans le système PU (unité réduite ou « Per Unit »).

En cas d'appel de courant à la suite d'une surcharge momentanée ou d'une perturbation ayant pour origine un courtcircuit, la chute de tension aux bornes de la machine synchrone est faible et, par conséquent, grâce à la présence de la self locale, l'augmentation du courant électrique livré par cette source locale sera faible également, en tout cas si faible que les onduleurs ne seront pas affectés par cet accroissement du courant.

La réactance de la self associée à la machine synchrone est supérieure à la réactance subtransitoire directe de la machine synchrone et est de préférence de l'ordre de 3 à 10 fois la réactance subtransitoire directe de la machine synchrone, ou mieux encore est de l'ordre de 5 à 8 fois la dite réactance.

La valeur de la réactance de la self locale est de l'ordre de 25 à 40 % en se référant à la puissance nominale de la source locale ou des sources locales qui lui sont connectées.

La machine synchrone pourra être avantageusement couplée mécaniquement à une réserve d'énergie cinétique qui prolongera la durée pendant laquelle la machine synchrone pourra générer un courant suffisant pendant la période nécessaire pour ouvrir les disjoncteurs du côté réseau externe en cas de panne électrique dans ce réseau.

Le système de protection permet également d'associer très avantageusement des systèmes de cogénération avec un réseau urbain ou industriel comme un groupe électrogène qui fonctionne lorsque la puissance produite par les sources d'énergie locales est insuffisante pour alimenter les utilisateurs dans le réseau local.

Le groupe électrogène pourra être connecté directement sur la machine synchrone ou via une self locale comme le sont les sources locales.

Le système de protection peut fonctionner aussi bien en moyenne tension qu'en basse tension ou éventuellement en moyenne tension avec l'insertion d'un transformateur dans le réseau local et la machine synchrone.

Pour plus de clarté, quelques exemples de réalisation d'un système de protection selon l'invention sont décrits ci-après à titre illustratif et non restrictif, référence étant faite aux dessins annexés dans lesquels:

la figure 1A est une vue schématique d'un réseau électrique local connu branché sur un réseau externe dans lequel l'onduleur est directement connecté à la machine synchrone;
la figure 1B montre une variante d'un réseau électrique local connu dans lequel la machine synchrone est connectée à une prise intermédiaire de la self;
la figure 2 représente le même réseau mais pourvue d'un système de protection selon l'invention consistant en la self 13;
la figure 3 montre un réseau local semblable branché sur un réseau externe lors d'une coupure du réseau externe;
la figure 4 montre une variante du réseau de la figure 3;
la figure 5 montre un réseau plus élaboré selon l'invention.
La figure 6 montre une variante de la figure 5 mais où chacune des sources locales dispose de sa propre self locale.

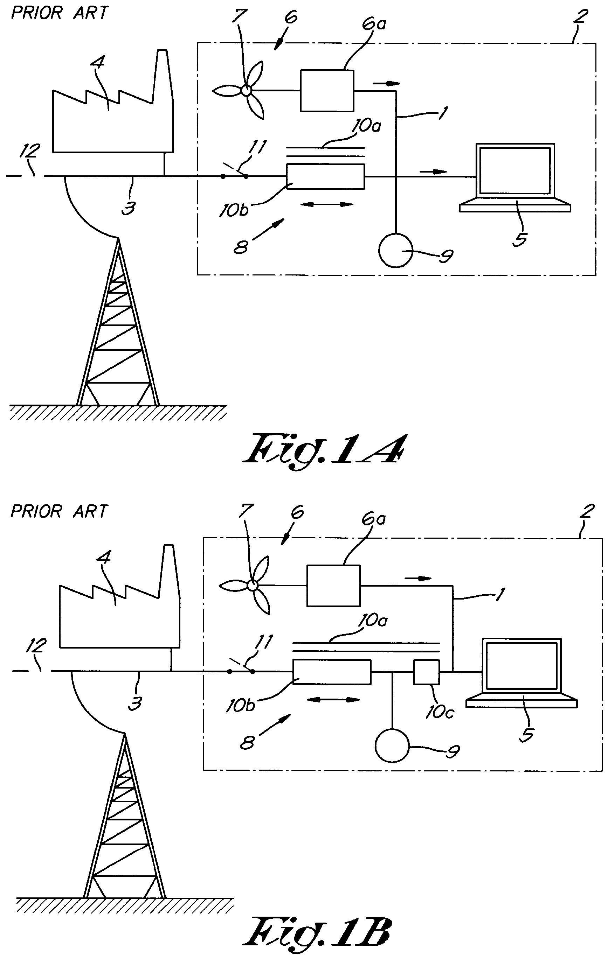

Dans la figure 1A est représenté un réseau local 1 connu d'un site 2 par exemple désigné par le cadre 2, le réseau local 1 étant connecté à un réseau urbain externe 3 sur lequel est branché un autre site externe 4 représenté schématiquement par le symbole d'une usine.

Le site 2 comprend dans l'exemple de la figure 1A un nombre d'utilisateurs 5 comme par exemple des ordinateurs, des installations de production, des installations de sécurité, ou d'autres systèmes électriques, qui sont tous connectés au réseau électrique local 1.

Le site 2 comprend aussi une source locale d'énergie électrique 6 d'origine différente branchée sur le réseau local 3 par l'intermédiaire d'un onduleur 6a.

Dans le cas présent de la figure 1A, la source locale 6 est représentée par une éolienne 7, mais cela pourrait être n'importe quelle autre source « verte » pouvant injecter l'excédent d'énergie électrique non consommé par le réseau local 1 dans le réseau externe 3.

Le réseau local 1 est pourvu d'un système de protection 8 connu pour limiter l'impact des perturbations du réseau électrique externe 3, sur le réseau électrique local et donc pour protéger les utilisateurs des interruptions ou d'autres fortes perturbations du réseau externe 3.

Le système de protection 8 de la figure 1A comprend une machine synchrone 9, par exemple une ASI (alimentation sans interruption), branchée sur le réseau local 1 qui est branchée sur le réseau externe 3 par l'intermédiaire d'une self 10 simple avec un seul noyau ferromagnétique.

Bien entendu, comme représenté dans la figure 1B, la self 10 peut aussi bien être une self à prise intermédiaire avec un seul noyau ferromagnétique 10a mais avec deux branches de bobinages 10b et 10c, comme celle utilisée dans certains systèmes ASI de l'état de la technique.

Le réseau local 1 comprend un disjoncteur 11 permettant d'isoler le réseau local 1 du réseau externe 3 en cas de nécessité, par exemple lors d'une coupure électrique du réseau externe à un endroit 12 éloigné du site.

Quand une coupure du réseau externe 3 (figure 1A ou 1B) est détectée dans le réseau local 1, les systèmes de sécurité du réseau 1 vont commander l'ouverture du disjoncteur 11 aussi vite que possible.

L'ouverture du disjoncteur prend toujours un certain temps qui ne doit pas excéder les 100 millisecondes.

Pendant cette période d'ouverture du disjoncteur le réseau local 1 reste connecté au réseau externe 3 via la self réseau 10; la machine synchrone 9 et l'éolienne 7 vont alimenter non seulement les utilisateurs 5 du site, mais également tous les utilisateurs externes qui sont branchés sur le réseau extérieur 3 entre l'entrée du site 2 et l'endroit 12 de la coupure, par exemple les utilisateurs de l'usine extérieure 4, ce qui est perçu du côté réseau local 1 comme un appel énorme de courant seulement limité par la self réseau 10 pour la machine synchrone 9 et les sources locales 6, ce qui fait chuter significativement la tension du réseau local 1 dès que le temps de temps d'ouverture du disjoncteur 11 dépasse la durée de la constante de temps de la réactance subtransitoire, par exemple 15 msec, de la machine synchrone 9.

Généralement, la puissance que doit fournir l'éolienne 7 pendant cette période est considérable et la surintensité qu'elle engendre est suffisante pour provoquer son arrêt notamment lorsque les éoliennes alimentent les utilisateurs via des onduleurs 6a.

Ceci provient du fait que les onduleurs 6a n'ont pas les capacités de fournir des pointes de courant suffisantes pour maintenir une tension acceptable pour les utilisateurs 5 tout en alimentant le réseau externe pendant le temps d'ouverture du disjoncteur 11.

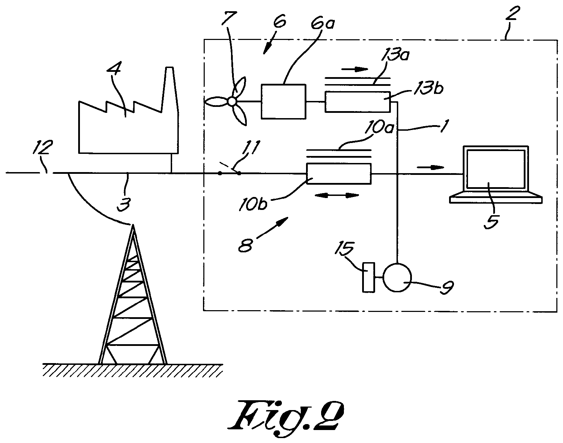

Pour éviter de tels problèmes, le système de protection 8 est équipé selon l'invention d'une self locale 13 insérée entre la source locale 6 avec l'onduleur 6a et le réseau local 1 comme représenté dans la figure 2

La self locale 13 est de préférence une self qui comporte un seul bobinage 13a autour d'un noyau ferromagnétique 13b branchée entre la source locale 6 et la machine synchrone 9, ceci dans le but de protéger la charge 5 et la source locale 6 d'un court-circuit ou d'un appel de courant important sur le réseau.

La machine synchrone 9 est sélectionnée de préférence de manière à ce que sa réactance subtransitoire L9 directe soit relativement faible, par exemple de l'ordre de 5 à 8% de la réactance nominale du réseau local 1 eu égard à la puissance nominale à la tension nominale du réseau local 1, par exemple 5%.

On se réfère à la réactance PU (per unit ou unitaire) du réseau local 1, soit 100% pour la réactance sous laquelle le réseau local 1 débite son courant nominal pour une puissance nominale sous une tension nominale. La notion de système Per Unit qui exprime toutes les grandeurs électriques d'une machine ou d'une installation en % est bien connu par l'homme de métier dans le domaine technique considéré.

La réactance 1.10 de la self réseau 10 associée à la machine synchrone 9 est de préférence de l'ordre de 5 à 8 fois la réactance subtransitoire L9 précitée de la machine synchrone 9, par exemple de l'ordre de 30 à 40%, par exemple 35%.

La réactance L13 de la self locale 13 associée à la source locale 6 est de 25 à 40% de la réactance nominale L6 (en PU) de la source locale 6, par exemple de l'ordre de 30%.

Le système de protection sert à maintenir opérationnelles les sources locales 6 en évitant leur déclenchement par surintensité lors d'un évènement pouvant être assimilé à un court-circuit sur le réseau externe 3 et en outre contribue à réduire la chute de tension sur le réseau local 1 dans les mêmes circonstances que précédemment.

Dans le schéma simplifié de la figure 2, et dans la mesure où l'éolienne 6 avec son onduleur 6a est apte à maintenir sa tension nominale et en faisant abstraction de la réactance du réseau externe 3, la chute de tension peut être exprimée par la formule suivante si l'on considère les valeurs annoncées à titre d'exemple, soit L9=5%, L10=35%, L13=30%, et que la puissance de l'éolienne 6 est égale à la puissance nominale de la machine synchrone 9:

$$L9 \; / \; (L10 \; + \; (L13*L9)/(L13+L9)) \; = \; 5/(35+(30*5)/(30+5))$$

soit 12,7% ou environ 1/8.

A cause de la faible chute de la tension, la surintensité du courant fourni par la source d'énergie locale 6 sera amortie par le système de protection 8 selon l'invention et cela dans les limites opérationnelles des onduleurs 6a du circuit local 1.

Dans ce cas, l'augmentation de courant à fournir par l'éolienne 6 serait de 12,7/30 = 42,3 % ce qui reste dans les possibilités de l'éolienne 6 avec son onduleur 6a durant une période d'ouverture du disjoncteur 11 de l'ordre de 100 msec.

Dans le cas où la self locale 13 ne serait pas présente, et selon les mêmes hypothèses que précédemment, la source locale 6 devrait fournir en outre de sa charge nominale, le courant total qui est injecté dans le réseau amont (puisqu'elle maintient sa tension à la valeur nominale) soit une charge (100%)/L10 càd 100%/35% = 285% de son courant nominal, soit près de 7 fois plus que lorsque la self locale 13 est présente (42,3%), ce qui provoquerait instantanément la mise hors service de ladite source locale et la perte des charges locales.

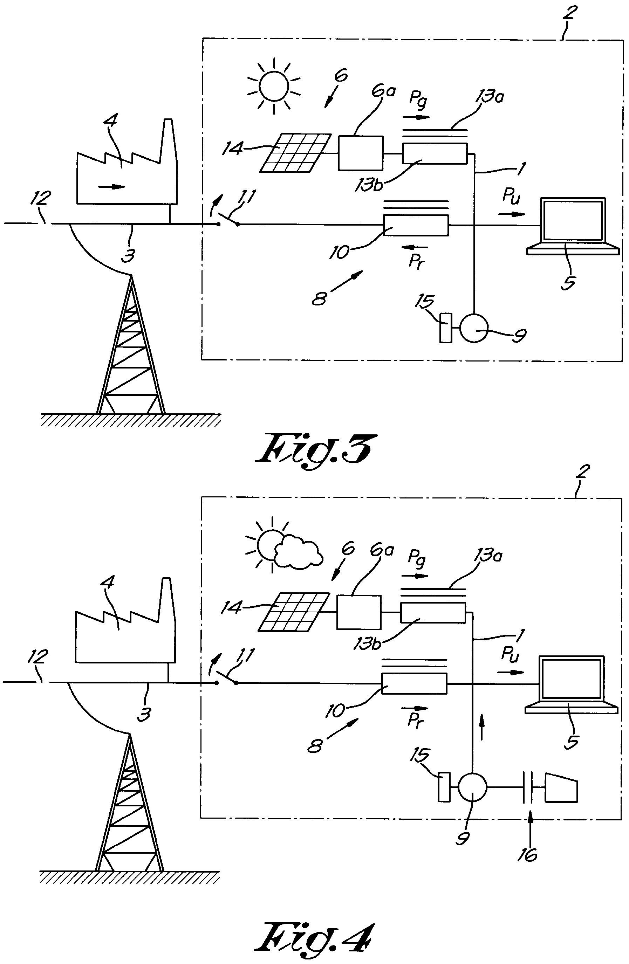

La figure 3 montre un réseau local 1 semblable à celui de la figure 2, mais dans lequel l'éolienne 7 a été remplacée par des panneaux photovoltaïques 14.

Quand il y a beaucoup de soleil, la puissance Pg fournie par les panneaux photovoltaïques peut être supérieure à la puissance Pu utilisée par les utilisateurs 5 du réseau local 1. Dans ce cas, l'excédent de puissance Pr est renvoyé dans le réseau externe 3.

Si un défaut du réseau externe 3 apparait à l'endroit 12 à une certaine distance du site 2, la tension tombe à une valeur proche de zéro Volts à l'entrée du réseau local 1 , au niveau du disjoncteur 11.

La machine synchrone 9 de basse réactance 1.9 va injecter un courant limité par la self réseau 10 dans le réseau externe 3. La chute de tension pour les utilisateurs 5 sera donc limitée en fonction du rapport entre la réactance L9 de la machine synchrone 9 combinée avec la réactance L10 et ne durera que le temps d'ouverture du disjoncteur 11 du côté du réseau externe 3.

D'autre part, l'onduleur 6a associé à la source locale 6 , du fait de la faible chute de tension aux bornes de la machine synchrone 9 et de la limitation réalisée par la self locale 13, ne fournira qu'un faible accroissement du courant durant la période d'ouverture du réseau externe 3 (< 100msec). Les utilisateurs 5 seront dès lors préservés face à un tel évènement puisqu'il n'y aura pas de perte de(s) la source(s) d'énergie locale(s) 6.

Le même circuit est représenté dans la figure 4 mais dans une situation où il y a. moins de soleil et dans lequel la puissance Pg fournie par la source locale 6 est inférieure à la puissance Pu utilisée par les utilisateurs 5: dans ce cas une partie de la puissance Pu provient du réseau externe 3.

Généralement on veillera à exploiter au mieux la puissance Pg venant des sources locales « vertes » 6 afin de minimiser la puissance Pr fournie par le réseau externe 3.

Si une coupure du réseau 3 survient à l'endroit 12, le comportement du système 8 sera semblable au cas précédent pendant, les premiers centièmes de seconde, mais étant donné que la puissance « verte » Pg n'est pas suffisante, la machine synchrone 9 fournira la puissance active aux utilisateurs 5 tout en diminuant en vitesse, jusqu'à la perte rapide de la tension.

Dans un tel cas on devra par exemple faire appel à une source d'énergie locale 6 supplémentaire comme par exemple un accumulateur d'énergie cinétique 15 couplé mécaniquement à la machine synchrone 9 comme représenté dans la figure 4 et/ou à un moteur diesel ou autre qui est démarré en cas d'une coupure du réseau externe 3, le temps nécessaire pour couvrir la coupure comme dans la figure 3.

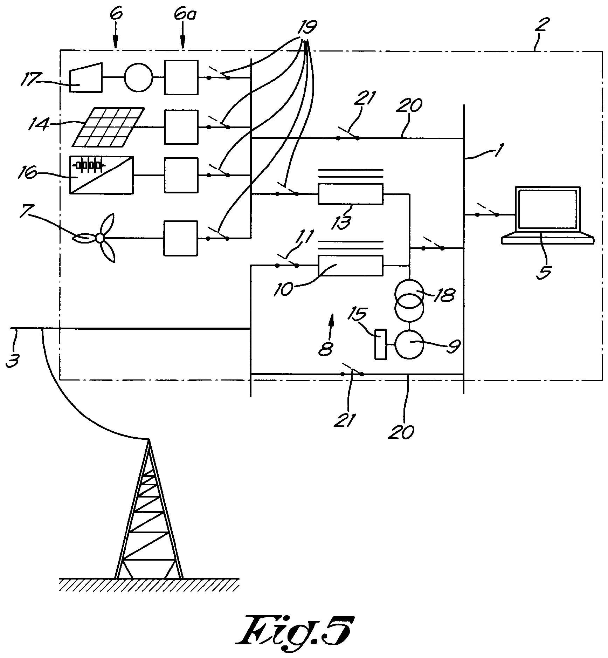

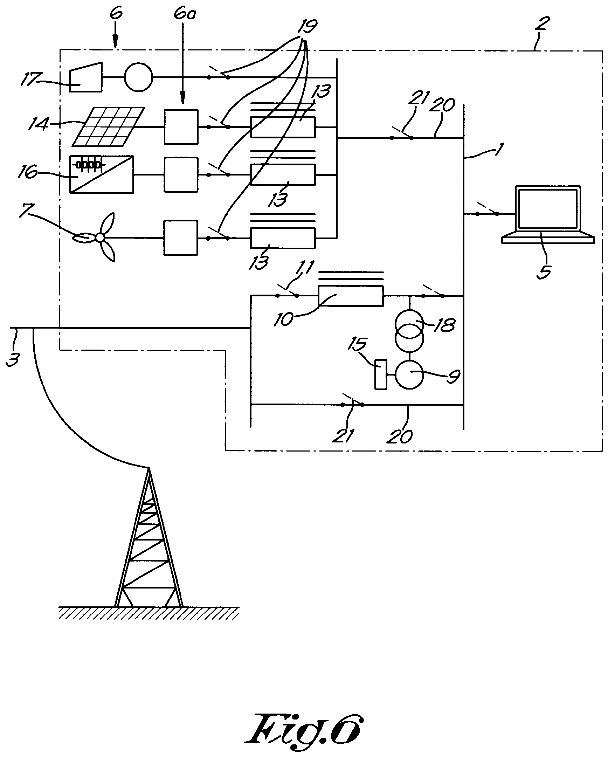

On pourra également associer à l'ensemble différentes sources d'énergie 6 de nature différente branchées simultanément sur le réseau local 1, comme dans la figure 5, entre autres une éolienne 7, des panneaux photovoltaïques 14, des batteries 16 et un groupe électrogène 17 ou un autre système de cogénération d'électricité avec le réseau externe, connecté directement à la machine synchrone 9 soit via une seule self locale 13 qui est commune à toutes les sources locales 6 ou une partie de celles-ci comme dans le cas de la figure 6, soit via des selfs locales 1.3 individuelles branchées directement sur la machine synchrone 9 pour toutes les sources locales 6 ou une partie de celles-ci.

La réactance de la self locale 13 associée à l'ensemble des sources d'énergie locales 6 est de préférence de 25 à 40% de la réactance nominale (en PU) de l'ensemble des sources locales qui lui sont connectées, ou, dans le cas de plusieurs selfs individuelles associées chacune à une des sources locales 6, est calculée de manière à réaliser une réactance de 25 à 40% de la réactance nominale de la source associée.

I,e système peut fonctionner aussi bien en moyenne tension qu'en basse tension ou éventuellement en moyenne tension avec l'insertion d'un transformateur 18 dans la branche de la machine synchrone 9.

Les figures 5 et 6 montrent aussi la présence de plusieurs disjoncteurs/interrupteurs 19 permettant d'isoler ou de connecter les sources locales 6 du système et montrent également l'application de deux connexions by-pass 20, chacune avec un interrupteur ou un disjoncteur 21, permettant de court-circuiter les selfs 10 et 13, par exemple pour des besoins d'entretien ou de réparation.

Les figures 2 à 5 mentionnées ci-dessus ne sont pas limitatives quant au nombre des entrées et au nombre de selfs ou de machines synchrones.

Le système est avantageux avec l'ensemble des sources « vertes » connectées aussi bien qu'avec une des sources représentées connectée isolément.

La self 10 est une self classique ou alternativement une self à prise intermédiaire connue comme dans le cas de la figure 1B.

Il est évident que l'invention n'est nullement limitée aux exemples décrits ci-avant mais que de nombreuses modifications peuvent être apportées au système de protection selon l'invention décrite ci-avant sans sortir du cadre de l'invention telle que définie dans les revendications suivantes.

## Revendications

**1.** Système de protection pour limiter l'impact des perturbations d'un réseau électrique urbain ou industriel externe (3) sur un réseau électrique local (1) d'un site qui est connecté au réseau externe (3) et qui comprend au moins une source locale d'énergie électrique, dite « source locale (6) » branchée sur le réseau local (1) et pouvant injecter l'excédent d'énergie électrique non consommé par le réseau local 1 dans le réseau externe (3), le système de protection comprenant une machine synchrone (9) branchée sur le réseau local (1) qui est lui-même branché sur le réseau externe (3) par l'intermédiaire c'une self (10), dite « self réseau » qui est branchée directement sur le réseau local (1), **caractérisé en ce que** la machine synchrone (9) est une machine à basse réactance subtransitoire directe qui est inférieure à 10% de la réactance nominale du réseau local (1) et que le système de protection comprend au moins une self locale (13) auxiliaire qui est associée à la source locale (6) et pour laquelle la valeur de la réactance (L13) est de 25 à 40% de la réactance (L6) en PU, Per Unit, nominale de la source locale (6) et qui est branchée sur le réseau local (1) entre la susdite source locale (6) et la machine synchrone (9) .

2. Système de protection selon la revendication 1, **caractérisé en ce que** la réactance subtransitoire directe de la machine synchrone (9) est de l'ordre de 5 à 8% de cette réactance nominale du réseau local (1) .

3. Système de protection selon la revendication 2, **caractérisé en ce que** la valeur de la réactance (L10) de la self (10) associée à la machine synchrone (9) est de l'ordre de 4 à 10 fois la réactance subtransitoire directe de la machine synchrone (9), ou mieux encore de l'ordre de 5 à 8 fois la réactance subtransitoire directe de la machine synchrone (9), de préférence de l'ordre de 30 à 40% de la réactance en PU, Per Unit, nominale du réseau local (1).

4. Système de protection selon l'une quelconque des revendications précédentes, **caractérisé en ce que** la self locale (13) est une self (13) simple avec un seul noyau ferromagnétique.

5. Système de protection selon l'une quelconque des revendications précédentes, **caractérisé en ce que** la source locale (6) d'énergie électrique d'origine différente branchée sur le réseau local (1) est une source parmi la liste non-limitative suivante:

   - panneau photovoltaïque (14);
   - éolienne (7);
   - batterie (16) ou autre accumulateur d'énergie électrique;
   - groupe électrogène (17).

6. Système de protection selon l'une quelconque des revendications précédentes, **caractérisé en ce que** la machine synchrone (9) est couplée mécaniquement à une réserve d'énergie cinétique (15).

7. Système de protection selon l'une quelconque des revendications précédentes, **caractérisé en ce qu'**il comprend un système de cogénération d'électricité avec le réseau externe (3), comme un groupe électrogène (17) .

8. Système de protection selon la revendication 7, **caractérisé en ce que** le groupe électrogène (17) peut être connecté directement sur la machine synchrone (9) ou via une self.

9. Système de protection selon l'une quelconque des revendications précédentes, **caractérisé en ce que** la machine synchrone (9) est branchée sur le réseau local (1) par l'intermédiaire d'un transformateur (18).

10. Système de protection selon l'une quelconque des revendications précédentes, **caractérisé en ce qu'**il comprend plusieurs sources locales (6) d'énergie électrique d'origine différente, dont au moins une partie est branchée sur le réseau local (1) au moyen j'une self locale (13) propre.

11. Système de protection selon l'une quelconque des revendications 1 à 10, **caractérisé en ce qu'** il comprend plusieurs sources locales d'énergie électrique (6) d'origine différente, dont chacune des sources locales (6) est branchée sur le réseau local (1) au moyen d'une self locale propre (13) .

12. Système de protection selon la revendication 10 ou 11, **caractérisé en ce que** les selfs locales (13) sont connectées en étoile sur le réseau local (1).

**Patentansprüche**

1. Schutzsystem zur Begrenzung der Auswirkungen von Störungen eines externen städtischen oder industriellen Stromnetzes (3) auf ein lokales Stromnetz (1) einer Anlage, die an das externe Netz (3) angeschlossen ist und mindestens eine lokale elektrische Energiequelle, die als "lokale Quelle (6)" bezeichnet wird und mit dem lokalen Netz (1) verbunden ist, umfasst, und die überschüssige elektrische Energie, die nicht vom lokalen Netz (1) verbraucht wird, in das externe Netz (3) einspeisen kann, wobei das Schutzsystem eine Synchronmaschine (9) umfasst, die mit dem lokalen Netz (1) verbunden ist, welches selbst über eine Drossel (10) mit dem externen Netz (3) verbunden ist, die als "Netzdrossel" bezeichnet wird und die direkt mit dem lokalen Netz (1) verbunden ist, **dadurch gekennzeichnet, dass** die Synchronmaschine (9) eine Maschine mit geringer direkter subtransienter Reaktanz ist, die weniger als 10 % der nominalen Reaktanz des lokalen Netzes (1) beträgt, und **dadurch gekennzeichnet, dass** das Schutzsystem mindestens eine lokale Hilfsdrossel (13) umfasst, die der lokalen Quelle (6) zugeordnet ist und für die der Wert der Reaktanz (L13) 25 bis 40 % der nominalen Reaktanz (L6) in PU, Per Unit, der lokalen Quelle (6) beträgt, und die mit dem lokalen Netz (1) zwischen der vorgenannten lokalen Quelle (6) und der Synchronmaschine (9) verbunden ist.

2. Schutzsystem nach Anspruch 1, **dadurch gekennzeichnet, dass** die direkte subtransiente Reaktanz der Synchronmaschine (9) in der Größenordnung von 5 bis 8 % dieser nominalen Reaktanz des lokalen Netzes (1) liegt.

3. Schutzsystem nach Anspruch 2, **dadurch gekennzeichnet, dass** der der Synchronmaschine (9) zugeordnete Reaktanzwert (L10) der Drossel (10) in der Größenordnung des 4- bis 10-Fachen der direkten subtransienten Reaktanz der Synchronmaschine (9) liegt, oder besser noch in der Größenordnung des 5- bis 8-Fachen der direkten subtransienten Reaktanz der Synchronmaschine (9), vorzugsweise in der Größenordnung von 30 bis 40 % der nominalen Reaktanz in PU, Per Unit, des lokalen Netzes (1).

4. Schutzsystem nach einem der vorhergehenden Ansprüche, **dadurch gekennzeichnet, dass** die lokale Drossel (13) eine einfache Drossel (13) mit einem einzelnen ferromagnetischen Kern ist.

5. Schutzsystem nach einem der vorhergehenden Ansprüche, **dadurch gekennzeichnet, dass** die lokale Quelle (6) elektrischer Energie unterschiedlicher Herkunft, die mit dem lokalen Netz (1) verbunden ist, eine Quelle aus der folgenden nicht erschöpfenden Liste ist:

   - Solarmodul (14);
   - Windkraftanlage (7);
   - Batterie (16) oder sonstiger elektrischer Energiespeicher;
   - Stromaggregat (17).

6. Schutzsystem nach einem der vorhergehenden Ansprüche, **dadurch gekennzeichnet, dass** die Synchronmaschine (9) mechanisch an eine Reservequelle kinetischer Energie (15) gekoppelt ist.

7. Schutzsystem nach einem der vorhergehenden Ansprüche, **dadurch gekennzeichnet, dass** es ein KWK-Stromsystem mit dem externen Netz (3), beispielsweise einem Stromaggregat (17), bildet.

8. Schutzsystem nach Anspruch 7, **dadurch gekennzeichnet, dass** das Stromaggregat (17) direkt an die Synchronmaschine (9) oder über eine Drossel angeschlossen werden kann.

9. Schutzsystem nach einem der vorhergehenden Ansprüche, **dadurch gekennzeichnet, dass** die Synchronmaschine (9) über einen Transformator (18) mit dem lokalen Netz (1) verbunden ist.

10. Schutzsystem nach einem der vorhergehenden Ansprüche, **dadurch gekennzeichnet, dass** es mehrere lokale Quellen (6) elektrischer Energie unterschiedlicher Herkunft umfasst, von denen mindestens ein Teil mittels einer eigenen lokalen Drossel (13) mit dem lokalen Netz (1) verbunden ist.

11. Schutzsystem nach einem der Ansprüche 1 bis 10, das **dadurch gekennzeichnet ist, dass** es mehrere lokale Quellen elektrischer Energie (6) unterschiedlicher Herkunft umfasst, von denen jede der lokalen Quellen (6) mittels einer eigenen lokalen Drossel (13) mit dem lokalen Netz (1) verbunden ist.

12. Schutzsystem nach Anspruch 10 oder 11, **dadurch gekennzeichnet, dass** die lokalen Drosseln (13) sternförmig im lokalen Netz (1) verbunden sind.

**Claims**

1. Protection system for limiting the impact of disturbances from an external urban or industrial electrical network (3) on a local electrical network (1) of a site which is connected to the external network (3) and which comprises at least one local source of electrical energy, called "local source (6)" connected to the local network (1) and capable of injecting the excess electrical energy not consumed by the local network (1) into the external network (3), the protection system comprising a synchronous machine (9) connected to the local network (1) which is itself connected to the external network (3) via a choke (10), called "network choke" which is connected directly to the local network (1), **characterised in that** the synchronous machine (9) is a machine with low direct subtransient reactance which is less than 10% of the nominal reactance of the local network (1) and that the protection system comprises at least one auxiliary local choke (13) which is associated with the local source (6) and for which the reactance value (L13) is 25 to 40% of the nominal reactance (L6) in PU, Per Unit, of the local source (6) and which is connected to the local network (1) between the said local source (6) and the synchronous machine (9).

2. Protection system according to claim 1, **characterised in that** the direct subtransient reactance of the synchronous machine (9) is of the order of 5 to 8% of such nominal reactance of the local network (1).

3. Protection system according to claim 2, **characterised in that** the reactance value (L10) of the choke (10) associated with the synchronous machine (9) is of the order of 4 to 10 times the direct subtransient reactance of the synchronous machine (9), or better still of the order of 5 to 8 times the direct subtransient reactance of the synchronous machine (9), preferably of the order of 30 to 40% of the nominal PU, Per Unit, reactance of the local network (1).

4. Protection system according to any one of the previous claims, **characterised in that** the local choke (13) is a simple choke (13) with a single ferromagnetic core.

5. Protection system according to any one of the previous claims, **characterised in that** the local source (6) of electrical energy of different origin connected to the local network (1) is a source from the following non-exhaustive list:

   - photovoltaic panel (14);
   - wind turbine (7);
   - battery (16) or other electrical energy accumulator;
   - generator set (17).

6. Protection system according to any one of the preceding claims, **characterised in that** the synchronous machine (9) is mechanically coupled to a kinetic energy reserve (15).

7. Protection system according to any one of the previous claims, **characterised in that** it comprises a system of electricity cogeneration with the external network (3), such as a generator set (17).

8. Protection system according to claim 7, **characterised in that** the generator set (17) can be connected directly to the synchronous machine (9) or via a choke.

9. Protection system according to any one of the previous claims, **characterised in that** the synchronous machine (9) is connected to the local network (1) via a transformer (18).

10. Protection system according to any one of the previous claims, **characterised in that** it comprises several local sources (6) of electrical energy of different origin, at least part of which is connected to the local network (1) by means of its own local choke (13).

11. Protection system according to any one of the claims 1 to 10, **characterised in that** it comprises several local sources of electrical energy (6) of different origin, each of said local sources (6) being connected to the local network (1) by means of its own local choke (13).

12. Protection system according to claim 10 or 11, **characterised in that** the local chokes (13) are connected in a star configuration to the local network (1).

PRIOR ART

**Fig.1A**

PRIOR ART

**Fig.1B**

*Fig.2*

**Fig.3**

**Fig.4**

*Fig.5*

*Fig.6*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1533884 A
- GB 1309858 A
- DE 19857754
- US 6023152 A
- EP 1589630 A
- EP 1126576 A